# EUROPEAN PATENT APPLICATION

(11) **EP 3 872 516 A1**
(43) Date of publication of application: **01.09.2021**
(21) Application number: 20159486.8
(22) Date of filing: 26.02.2020
(51) Int. Cl.: G01S 5/00, G01S 5/02, H04W 4/021

(54) **POSITIONING TECHNOLOGY SELECTION FOR GEO-FENCE**

(71) Applicant: HERE Global B.V., 5611 ZT Eindhoven (NL)
(72) Inventor: RAUHALA, Petri, 33100 Tampere (FI); WIROLA, Lauri, 33100 Tampere (FI); LUOMI, Marko, 33100 Tampere (FI)
(74) Representative: Cohausz & Florack

(57) **Abstract**

The invention inter alia relates to a method, performed by at least a first apparatus (110, 120, 130, 600, 700), the method comprising: obtaining (210) geo-fence information at least partially defining a geo-fence; obtaining (220) confidence information indicating a desired confidence for triggering the geo-fence; and selecting (230), from multiple positioning technologies, at least one preferred positioning technology to be used for evaluating the geo-fence, wherein the selection of the at least one preferred positioning technology takes into account the desired confidence and power consumption of the multiple positioning technologies.

## Description

### FIELD OF THE DISCLOSURE

The invention relates to the field of geo-fences and the use thereof and in particular to the process of setting up and evaluating or triggering geo-fences.

### BACKGROUND

The number of devices with location capabilities is expected to grow exponentially in the next decade or so. This growth is the result of the Internet-of-Things-era (IoT), in which more and more devices get connected to the Internet. Soon homes, factories, cities and transportation means will be equipped with low-cost sensors that produce real-time information on various characteristics and environment variables. Moreover, the cheaper electronics enables factories and industries to equip assets and supply chains with trackers that provide real-time information on the flow of goods.

The basic ingredient of the IoT story is that the sensors and trackers are location-aware. The location-awareness can be achieved through two means: either the device has its own positioning capabilities (like GNSS or cellular/WiFi/Bluetooth offline positioning) or the device makes measurements of the radio environment (cellular/WiFi/Bluetooth) and sends them to the cloud for position determination or performs positioning based on a radio map locally stored at the device, wherein said positioning may be an offline positioning. A radiomap is a map that relates identification, signal strength or any other parameter of radio access point like cellular base station, wi-fi access point or distribution of such a parameter to a real word location e.g. latitude, longitude and altitude.

When it comes to small devices that must function autonomously for extended periods of time, power consumption is of special concern. The devices are powered by batteries and, thus, any means to reduce current drain are welcome. As far as location technologies are concerned, there are few ways to reduce power consumption. The greatest power saving results from using the correct technology at the correct time. To exemplify, when low location accuracy is adequate, it is advantageous to use cellular positioning, because it is cheap in terms of energy.

Location is important not only for simple tracking use cases, but also for event notifications. Specifically, when events are tied to geographical constraints, one talks about geo-fences. A geo-fence may, for example, be a circular area or a polygon. When the device enters (or leaves) the defined area, an observer may get notified about the event. While geo-fences are powerful tools, they may also consume a lot of power. Thus, also in such use cases the correct choice of technology is of essence.

### SUMMARY OF SOME EXEMPLARY EMBODIMENTS

The modern positioning and tracking systems effectively utilize not only a single positioning method or technology, but usually various positioning technologies available for the respective application or use case, including GNSS, cellular networks and Wi-Fi networks as examples of typical outdoor positioning methods. Utilized indoor positioning technologies also include Wi-Fi networks, but also Bluetooth systems and UWB system. The same technologies are also used for evaluating or triggering geo-fences.

When the position estimate is considered to be a point-like estimation, the triggering of a geo-fence can be handled quite easily, as the position estimate is either inside or outside the geo-fence, similar to a binary state. However, a position estimate is typically associated with a position uncertainty in particular depending on the technology used. The position estimate uncertainty, however, affects the geo-fence evaluation. More specifically, this position uncertainty, in turn, results in that the triggering of a geo-fence can only be assessed to have taken place with a certain probability or confidence.

Another aspect to consider is the energy efficiency, when using geo-fences, in particular in view of the often battery powered IoT devices. It would be desirable to use the location technology that consumes the least energy. However, this typically also affects the position uncertainty, because the energy consumption and the accuracy tend to correlate (i.e. positioning technologies with high accuracy consumer more power).

From the power consumption perspective, it would thus be ideal to actually use inaccurate positioning technologies. However, this may prevent the evaluation of the geo-fence at a high confidence. In an extreme case, this may lead to situations where a geo-fence is set up and the parameters of the geo-fence in combination with the positioning conditions at the location of the geo-fence may be such that the geo-fence is never or hardly ever triggered. In the other extreme case, there may be a situation where the geo-fence may be set up such that the geo-fence is so easily triggered, that the idea of the geo-fence effectively becomes useless.

The present invention may allow for providing an improved set-up, generation and evaluation of geo-fences. In particular; it may be an object of the present invention to improve the power efficiency for evaluating geo-fences but at the same time avoid the generation of geo-fences which do not behave as desired, such as geo-fences which are impossible to trigger.

According to first exemplary aspect of the present invention, a method, performed by at least a first apparatus, is described, the method comprising:
- obtaining geo-fence information at least partially defining a geo-fence;
- obtaining confidence information indicating a desired confidence for triggering the geo-fence; and
- selecting, from multiple positioning technologies, at least one preferred positioning technology to be used for evaluating the geo-fence, wherein the selection of the at least one preferred positioning technology takes into account the desired confidence and power consumption of the multiple positioning technologies.

This (first) method may for instance be performed and/or controlled by an apparatus, for instance by a client device (e.g. a mobile device) or a server. Alternatively, this method may be performed and/or controlled by more than one apparatus, for instance a client (device e.g. a mobile device) and a server or a server cloud comprising at least two servers.

According to second exemplary aspect of the present invention, a method, performed by at least a second apparatus, is disclosed, the method comprising:
- obtaining, from at least a first apparatus,
   - geo-fence information at least partially defining a geo-fence;
   - confidence information indicating a desired confidence for triggering the geo-fence; and
   - information indicating at least one preferred positioning technology to be used for evaluating the geo-fence.

This (second) method may for instance be performed and/or controlled by an electronic device such as an Internet-of-Things (IoT) device, a tracker, or a low capability device. The electronic device may in particular be a battery-powered device. The electronic device may in particular be a battery-powered device with location awareness. For instance, the method may be performed and/or controlled by using at least one processor of the electronic device.

According to any of the first and second exemplary aspect of the invention, a computer program is also disclosed, the computer program when executed by a processor causing an apparatus to perform and/or control the actions of the method according to the respective exemplary aspect of the present invention.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to any of the first and second exemplary aspect of the invention, an apparatus (e.g. the first apparatus) is disclosed, configured to perform and/or control or comprising respective means for performing and/or controlling the method according to the respective exemplary aspect of the present invention.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit In general, the means may comprise for instance one or more processing means or processors.

According to any of the first and second exemplary aspect of the invention, an apparatus is disclosed, comprising at least one processor and at least one memory including computer program code, the at least one memory and the computer program code configured to, with the at least one processor, cause an apparatus at least to perform and/or to control the method according to the respective exemplary aspect of the present invention.

The above-disclosed apparatus may be a module or a component for a device, for example a chip. Alternatively, the disclosed apparatus according to any aspect of the invention may be a device, for instance a gateway device. The disclosed apparatus according to any aspect of the invention may comprise only the disclosed components, for instance means, processor, memory, or may further comprise one or more additional components.

According to any of the first and second exemplary aspect of the invention, a system comprising multiple apparatuses is disclosed, wherein said apparatuses are configured to cooperate for performing the method according to the respective exemplary aspect of the invention or one of said apparatuses is configured for performing the method according to the respective exemplary aspect of the invention alone.

In particular, according to further exemplary aspect, a system is also disclosed at least comprising a first apparatus and a second apparatus, wherein said first apparatus and said second apparatus are configured to cooperate for performing the method according to any aspect or one of said first apparatus and said second apparatus is configured for performing the method according to any aspect alone. In particular, the first apparatus may be configured to perform the method according to the first exemplary aspect and the second apparatus may be configured to perform the method according to the second exemplary aspect.

In the following, exemplary features and exemplary embodiments of all aspects of the present invention will be described in further detail.

A geo-fence may be considered to be a virtual perimeter for a real-world geographic space, area or line. Accordingly, a geo-fence may be a one-, two-, or three-dimensional object. For instance, a geo-fence may be set around an area-of-interest or, if the geo-fence is of the type line, the geo-fence may define a kind of border, e.g. a country border or any other well-suited border. As an example, a geo-fence may be defined by a point and a geometric shape around the point, e.g. a circle or an ellipse around the point. As another example, a geo-fence may be defined by a polygon, wherein a polygon may be defined by a predefined set of points (e.g. corners) and/or lines (e.g. edges). Thus, as an example, the area of a geo-fence and/or the shape of a geo-fence may be defined by an (e.g. straight) line, a curve, an (open or closed) polygon, a rectangle, a square, an ellipse, a circle, an ellipsoid and/or a sphere. It may also be possible to combine such objects of the same or different category for defining a geo-fence of a more complex shape.

A geo-fence may be considered to define an area-of-interest at and/or around a specific location. As an illustrative example, a geo-fence could be a check point, area or space on the delivery route of a vehicle, e.g. a truck (or any movable mobile device), and somebody could be interested to know and get a notification when the delivery vehicle visits the check point (or check area), which could for example be one of the delivery locations (areas). Of course, a geo-fence could be used for any other well-suited area-of-interest, e.g. a school attendance zone, a neighborhood or any other zone. The geo-fence may also define a border such that it could be checked whether something or somebody (i.e. an asset such as a vehicle or truck or any movable mobile device, which may be location-aware) moves over the border being defined by the geo-fence. For instance, the border may be a border of an area and thus it can be checked whether an asset has moved over the country border.

Accordingly, geo-fence information may be considered any information partially or completely defining such a geo-fence. As a simple example, the geo-fence information may comprise coordinates of a geographic point on the surface of the earth and a radius in order to define a circular geo-fence.

The geo-fence may be set up or requested to be set up by a program or an operator, for instance. Accordingly, the geo-fence information may be desired or needed for the purpose of setting up the geo-fence for geo-fencing purposes.

As already explained, a position estimate obtained by means of a certain positioning technology is usually not considered to be a pure point-like estimation, but the position estimate is typically associated with a position uncertainty in particular depending on the situation and technology used. Specifically, the position estimate uncertainty, however, affects the evaluation whether a geo-fence is triggered, because the position uncertainty results in that the triggering of a geo-fence can only be assessed to have taken place with a certain confidence:

With the confidence information (e.g. indicated in % or as "high", "medium", "low") indicating a desired confidence for triggering the desired geo-fence, a confidence can be defined or set, so that the geo-fence is only considered triggered if this can be determined with at least this confidence. In other words, the desired confidence may in particular define a minimum confidence value or level needed for considering a triggering of the geo-fence. The confidence value or level may thus correspond to a probability or likelihood of a determined position being inside of the geo-fence. The desired confidence may also be understood as a probability or probability mass of a location estimate required to lie inside the geo-fence for considering the geo-fence as having been triggered. The confidence or confidence information may thus also be considered as a "triggering confidence" or "triggering confidence information".

Generally, triggering a geo-fence may be understood to mean that the position of one or more assets fulfills one or more predefined requirements with respect to the defined geo-fence. For this, the position of the asset(s) may be estimated and monitored (e.g. the geographical position of a mobile device, such as an IoT device), in particular repeatedly. As non-limiting examples, the predefined requirement (which may be repeatedly checked for) may be whether the asset(s) have entered the geo-fence, have left the geo-fence, have crossed a border of the geo-fence, are inside the geo-fence, are outside the geo-fence or have remained inside or outside the geo-fence. The present invention, however, in particular focuses on the question whether it can be determined with sufficient confidence, that a position is inside or has remained inside a geo-fence, since particularly the determination thereof can be problematic when relying on positions having a considerable positioning uncertainty compared to the size of the area of the geo-fence. Thus, the exemplary method may in particular comprise checking whether (and in particular determining that) the position of an asset (such as the second apparatus) is (still) inside the geo-fence.

In case a geo-fence is determined to be triggered (i.e. determined to be triggered with the desired confidence), different actions may be caused or provoked, which may in particular depend on the use case or purpose of the specific geo-fence. For instance, an output may be provided indicating the triggering of the geo-fence. This output may be a user output directed at a user of a device. The output may be provided via a user interface. The output may be provided to the user, who may have set up the geo-fence, for instance. The output may be a visual, acoustic and/or haptic output. For instance, the user may receive a notification or pop-up message indicating that the geo-fence has been triggered. Alternatively or additionally, the output may be directed at another device or another application or part thereof (e.g. over a programming interface). Other actions may also be caused or proved in case of a triggering of a geo-fence. It is also possible that no action is taken or that an action is only taken if a further condition is met. In the example already mentioned above, the geo-fence could for instance be a check-point on a delivery route of a delivery vehicle, wherein the asset is the vehicle or something on the vehicle, so that a user is informed bay a message about the arrival of the delivery vehicle at the check-point when the vehicle triggers the geo-fence (e.g. when it is determined that the delivery vehicle has entered the check point with the desired confidence). However, many other use cases are possible, such as child location services (e.g. notifying of parents if a child leaves a designated area), telematics (e.g. triggering a warning when an equipped vehicle or person enters, leaves or crosses a defined zone around e.g. places of work, customer's sites or secure areas), protection of assets against stealing or control of unmanned aerial vehicles (e.g. preventing a device from flying into protected airspace), just to name a few non-limiting examples.

The desired confidence is considered to be a confidence which may be desired by a program or an operator, for instance. The confidence information indicating such a desired confidence may be desired or needed for the purpose of setting up a geo-fence for geo-fencing purposes. The confidence information on a desired confidence may also be referred to as "desired confidence information". The confidence information may also be understood as being a part of the geo-fence information defining the particular geo-fence.

The invention suggests selecting, from multiple positioning technologies, at least one preferred positioning technology to be used for evaluating the geo-fence. A position technology may be defined by the way the position technology estimates the position, by the type of signals used for estimating the position and/or by the type communication system used for estimating the position. Since, the selection of the at least one preferred positioning technology takes into account the desired confidence and power consumption of the multiple positioning technologies, an optimal usage of positioning technology resources can be realized and in particular energy savings can be realized. As an example, by taking into account the desired confidence, it can be made sure that only a positioning technology is selected that enables evaluating the geo-fence with the desired confidence (e.g. determining that a triggering of the geo-fence has occurred with said confidence). As an example, by taking into account the power consumption of the positioning technologies at the same time, it can be made sure that a positioning technology with a low (e.g. below a predefined threshold) or even the lowest power consumption (such as the positioning technology with the lowest power consumption available in the area defined by the geo-fence) is selected, which preferably still enables evaluating the geo-fence with the desired confidence. Typically, the smaller the area defined by the geo-fence, the higher the accuracy of the selected preferred positioning technology will have to be in order to be able to evaluate the geo-fence with the desired confidence. Thus, the selected preferred positioning technology may in particular be considered the optimal positioning technology for the specific combination of geo-fence and desired confidence in terms of power consumption.

In certain embodiments, it may be useful that more than one preferred positioning technology may be selected (e.g. at least a second preferred positioning technology). For instance, it may be the case that a certain optimal positioning technology is not available or may (temporarily) not function in or near the area defined by the geo-fence. For evaluating the geo-fence, the second preferred positioning technology may then be used as a backup, for instance. Also, it may be advantageous that different preferred positioning technologies are provided for different parts of the geo-fence, which will be explained in more detail further below.

In a preferred embodiment, the selection of the preferred positioning technology may further take into account the positioning technologies available in the area defined by the geo-fence. Thus, only those positioning technologies which are actually available in and/or near the area defined by the geo-fence may be considered as a preferred positioning technology.

In any case, after the preferred positioning technology is selected, the geo-fence information, the confidence information and the information indicating the at least one preferred positioning technology may be transmitted to and thereby obtained by the second apparatus. The geo-fence information, the confidence information and the information indicating the at least one preferred positioning technology may be together considered as a geo-fence definition and may in one example be provided in a single data structure, for instance. The second apparatus can then use the obtained information for evaluating the geo-fence with the desired confidence and the preferred positioning technology.

Accordingly, the exemplary methods may in particular be understood to be part of or to be a method of setting up a geo-fence and/or evaluating a geo-fence.

As a result, the power efficiency for evaluating geo-fences may be improved while at the same time the generation of geo-fences which do not behave as desired, such as geo-fences which are impossible to trigger, can be avoided.

According to an exemplary embodiment of all aspects of the invention, the at least one preferred positioning technology enables evaluating the geo-fence with the desired confidence. For instance, it may be made sure that only positioning technologies, which enable the evaluation of the geo-fence with the desired confidence, are considered for the selection. These compatible positioning technologies may be identified by having each positioning technology associated with one or more accuracies achievable by the respective positioning technology (such as a globally typically achievable accuracy or respective location dependent achievable accuracies), as will be explained in more detail below.

According to an exemplary embodiment of all aspects of the invention, for selecting the at least one preferred positioning technology, positioning technologies with lower power consumptions are preferred. Particularly, the positioning technology with the lowest power consumption, which however still enables the evaluation of the geo-fence with the desired confidence, is preferred. However, as already mentioned, it may also be possible that multiple positioning technologies with the same or similar low power consumptions are selected as preferred positioning technologies.

According to an exemplary embodiment of all aspects of the invention, the at least one preferred positioning technology has the lowest power consumption of those positioning technologies enabling evaluating the geo-fence with the desired confidence. Typically, the most power efficient result will be achieved, if the positioning technology having the lowest power consumption of those positioning technologies enabling evaluating the geo-fence with the desired confidence is selected as the preferred positioning technology.

According to an exemplary embodiment of all aspects of the invention, the selecting of the at least one preferred positioning technology comprises:
- determining, from a plurality of positioning technologies, those positioning technologies enabling evaluating the geo-fence with the desired confidence; and
- determining, from those positioning technologies enabling evaluating the geo-fence with the desired confidence, the at least one positioning technology having the lowest power consumption as the at least one preferred positioning method.

Determining a positioning technology enabling the evaluation of the geo-fence with the desired confidence may be realized by comparing the desired confidence with a confidence achievable with the respective positioning technology. For this, a certain positioning technology may be associated with an accuracy typically achievable by the respective positioning technology, so that together with the specific geo-fence the achievable confidence may be determined (as it is also explained in more detail below).This approach may have the advantage of not requiring to many or too complex computations. However, assuming a general accuracy for a positioning technology is often very imprecise (e.g. a GPS signal is more accurate than a Bluetooth signal outdoors while it may be the other way around indoors). Thus, it is preferred if the accuracy associated with a respective positioning technology is location dependent. Thus, there may be provided a database with location dependent achievable accuracies for the respective positioning technologies, for instance, which may allow for determining the (likewise location dependent) achievable confidence for the respective geo-fence. In any case, the positioning technologies which enable evaluating the geo-fence with the desired confidence can be determined and from those, the at least one positioning technology having the lowest power consumption can be determined as the at least one preferred positioning method. In contrast to the achievable accuracy, the power consumption can typically be indicated as a general or universal (i.e. in particular a location independent) information on a respective positioning technology.

In an alternative approach, the selecting of the at least one preferred positioning technology comprises:
- determining, from a plurality of positioning technologies, the at least one positioning technology having the lowest power consumption;
- checking whether the at least one positioning technology having the lowest power consumption enables evaluating the geo-fence with the desired confidence;
- using this at least one positioning technology as the at least one preferred positioning technology in case of a positive result of said checking; and
- repeating said determining and checking with the remaining positioning technologies in case of a negative result of said checking.

This approach may have the advantage (in particular in contrast to the above described approach) that the action of checking whether a positioning technology enables evaluating the geo-fence with the desired confidence may be performed fewer times and (in the best case) only needs to be performed once. Generally, the above actions of determining and checking may also be repeated in case a positive result is already achieved. This may for instance be the case if more than one positioning technology shall be determined (e.g. two, three, etc. preferred positioning technologies, which may be the two, three etc. positioning technologies with the least power consumption).

According to an exemplary embodiment of all aspects of the invention, the method further comprises:
- obtaining information on an achievable confidence for the geo-fence defined by the geo-fence information with respect to at least some of the multiple positioning technologies;
- using the information on an achievable confidence in order to determine whether a respective positioning technology enables evaluating the geo-fence with the desired confidence.

The information on an achievable confidence may also be referred to as achievable confidence information. The achievable confidence information can advantageously be used for checking whether the geo-fence can be evaluated with the desired confidence. In other words, it can be checked whether a respective positioning technology is compatible with the desired confidence. In one example, the achievable confidence information can be obtained as a pre-calculated value from a database. In another example, the achievable confidence information is determined or calculated, e.g. based on positioning uncertainty information for a specific positioning technology in the area of the geo-fence, which will be explained in more detail below.

Generally, an achievable confidence for a positioning technology and for a geo-fence is understood to be a confidence expected to be achievable when assessing whether the geo-fence has been triggered. The achievable confidence may thus be seen as defining a maximum confidence achievable when assessing whether the geo-fence has been triggered.

The achievable confidence typically depends on various factors. For instance, the achievable confidence may depend on the positioning performance (in particular the positioning uncertainty) of a respective positioning technology (in particular at a specific location) and/or the respective geo-fence (e.g. its location, its shape and/or its size), so that the achievable confidence varies with the positioning technology and/or with the geo-fence. Accordingly, the achievable confidence information may be a positioning-technology-specific, location-specific and/or geo-fence specific information on the achievable confidence. Accordingly, a different confidence may be achieved for a different technology, a different location and/or a differently shaped or sized geo-fence (since the achievable confidence is typically lower the smaller the geo-fence, as the maximum probability mass inside the geo-fence decreases).

Thus, a determination of the achievable confidence for triggering a certain geo-fence may in particular be based on the positioning performance at the respective location. The positioning performance in turn may be determined based on actual measurements of the positioning performance at or near respective locations. Alternatively, the positioning performance may be estimated based on a typically expected positioning performance in dependence on a priori information, such as the type of area (e.g. rural or urban area) or available information on the positioning system at respective locations (e.g. the number of available access points at a certain location).

According to an exemplary embodiment of all aspects of the invention, the method further comprises:
- obtaining positioning uncertainty information indicating one or more positioning uncertainties of one or more positioning technologies in the area defined by the geo-fence;
- determining, based on the geo-fence information and the positioning uncertainty information, an achievable confidence achievable with a respective positioning technology for the geo-fence defined by the geo-fence information.

This approach may be used in order to obtain the information on an achievable confidence as used above. Positioning uncertainty information may comprise or be representative of a measure of the precision of a position estimate, such as the (standard) variation or the variance of a position estimate. For instance, the positioning uncertainty may indicate the position uncertainty by means of the distance root mean square ("DRMS"), twice the distance root mean square ("2DRMS"), the circular error probability ("CEP", "CEP50"), the 68% radius ("CEP68"), the 95% radius ("R95"), a covariance matrix or a 1-sigma uncertainty ellipse, to name a few examples. Positioning uncertainty information may be derived from a database providing positioning uncertainty information depending on the location and depending on the positioning technology. For instance the surface of the earth (or a part thereof) may be divided into cells covering a certain geographic area (e.g. each cell covering a square of 10x10 meters, for instance, or any other suitable shape or size). For each cell, the database may indicate positioning uncertainty information in dependence of the positioning technology. The positioning uncertainty information for a geo-fence may be derived from the one or more cells which overlap with the area defined by the geo-fence. In other words, the positioning uncertainty information associated with the area defined by the geo-fence may be determined from positioning uncertainty information associated with one or more positions within this area. Such positioning uncertainty information may be readily available in a positioning database, for instance.

Based on the geo-fence information and the positioning uncertainty information for a certain positioning technology, confidence information on an achievable confidence for the geo-fence and the positioning technology may be determined.

The determination of the achievable confidence may for instance be realized by determining, for a specific geo-fence, for some or all positions in the area covered by the geo-fence the confidence of the true position lying within the geo-fence in view of the uncertainty for a respective position estimate (i.e. the probability mass of a position estimate distribution lying within the specific geo-fence). For instance. the highest achievable confidence can be used as the achievable confidence for this specific geo-fence. Alternatively, other ways of determining the achievable confidence from the multiple determined position-dependent confidence values, such as an (e.g. arithmetic or geometric) mean, a median, a mode. It may also be conceivable that the determined confidence values are weighted (e.g. depending on the position, e.g. by weighting confidence values at the border or at the center of the area defined by the geo-fence more heavily) so as to determine a weighted mean. However, more complex computations for determining the achievable confidence for a specific geo-fence may be employed, in particular if the values are pre-computed and stored and do not need to be computed on the fly on request.

As explained above, the achievable confidence information may be pre-calculated e.g. for different positioning technologies and for different geo-fences (e.g. sizes and/or shapes) at different locations and stored in a database or, alternatively, the achievable confidence information is calculated as needed for a particular case specifically for the relevant geo-fence and positioning technology when the geo-fence information is obtained. In any case, irrespective of how and when the achievable confidence information is obtained, it can then be used for comparing the desired confidence with the achievable confidence to determine whether a positioning technology enables evaluating the geo-fence with the desired confidence.

According to an exemplary embodiment of all aspects of the invention, multiple preferred positioning technologies to be used for evaluating the geo-fence are selected. As already mentioned, it may be desired to select multiple preferred positioning technologies, e.g. the preferred, the second preferred etc., so that the further preferred positioning technologies may serve as back-up positioning technologies, for instance. It may, however, also be the case that the geo-fence is divided into multiple sub-areas and that for each sub-area a preferred positioning technology is determined.

Accordingly, in a further exemplary embodiment of all aspects of the invention, the geo-fence comprises multiple sub-areas, wherein, for one or more of the multiple sub-areas, at least one preferred positioning technology to be used for evaluating the geo-fence in the respective sub-area is selected. This may in particular be relevant in case the geo-fence covers different areas (such as inside and outside areas), where different positioning technologies are present or preferred. This may in particular be the case for comparably large geo-fences. As another example, it may be sufficient to use one positioning technology outside the geo-fence (e.g. a positioning technology with a larger uncertainty or lower accuracy) and another positioning technology inside the geo-fence (e.g. a positioning technology with a smaller uncertainty or higher accuracy).

According to an exemplary embodiment of all aspects of the invention, one or more of the multiple positioning technologies are based on one or more of:
- a cellular communication system;
- a non-cellular communication system;
- a communication system providing signals of opportunity;
- a communication system providing a dedicated positioning solution;
- a global satellite navigation system;
- a wireless local area network;
- a communication system utilizing Wi-Fi technology;
- a communication system utilizing GSM technology;
- a communication system utilizing WCDMA technology;
- a communication system utilizing LTE technology;
- a communication system utilizing Bluetooth technology; and/or
- a communication system utilizing UWB technology.

Examples of a cellular communication system or network are a second generation (2G, for instance the Global System for Mobile Communication (GSM), the General Packet Radio System (GPRS), the Enhanced Data Rates for GSM Evolution (EDGE) or the High Speed Circuit-Switched Data (HSCSD)), third generation (3G, for instance the Universal Mobile Telecommunication System, UMTS, WCDMA, TD-SCDMA or CDMA-2000), fourth generation (4G, for instance the Long Term Evolution, LTE system, the LTE Advanced (LTE-A) system or the IEEE 802.16m WiMAX system), fifth generation (5G) or newer communication system or network.

Examples of a non-cellular communication system or network are a WLAN (e.g. a WiFi or IEEE 802.11) system, a Bluetooth (LE) system, a ZigBee system, a radio-frequency identification (RFID) system, a broadcasting network such as for instance Digital Video Broadcasting (DVB), Digital Audio Broadcasting (DAB) or Frequency-Modulated (FM) / Amplitude-Modulated (AM) system, a Near Field Communication (NFC) system, etc.

UWB or ultra-wideband is generally understood as a technology for transmitting information spread over a large bandwidth (typically >500 MHz), which allows the use of a very low energy level for short-range, high-bandwidth communications over a large portion of the radio spectrum.

More generally, a cellular communication system may for instance be characterized by a basically seamless pavement of a geographical area (usually in the order of at least hundreds or thousands of square kilometers) with cells in which coverage is provided by respective nodes of the communication system that are operated by the same operator, which network may for instance support communication handover between cells. Consequently, a non-cellular communication system may be characterized as a communication system that does not have all of these properties.

According to an exemplary embodiment of all aspects of the invention, the method further comprises:
- providing, to a second apparatus,
- the geo-fence information at least partially defining the geo-fence;
- the confidence information indicating the desired confidence for evaluating the geo-fence; and
- information indicating the least one selected preferred positioning technology to be used for evaluating the geo-fence.

The second apparatus may in particular be the apparatus (or asset) which can trigger the geo-fence, i.e. the position of which may satisfy the predefined condition. Accordingly, the position of the second apparatus may be monitored, e.g. by repeatedly estimating its position, as already mentioned. The geo-fence information, the confidence information and the information indicating the least one selected preferred positioning technology may be provided in a single data structure. In other words, the confidence information and the information indicating the least one selected preferred positioning technology may together be considered as part of an (extended) definition of the geo-fence.

Accordingly, in a further exemplary embodiment of all aspects of the invention, the geo-fence information, the confidence information and the information indicating the least one preferred positioning technology are provided to the second apparatus as part of a geo-fence definition.

According to an exemplary embodiment of all aspects of the invention, the method further comprises:
- evaluating the geo-fence based on the at least one preferred positioning technology.

Generally, the described approach is advantageous for any kind of asset and positioning technology. For instance, the asset (e.g. the second apparatus, such as a mobile device and in particular an loT device), the location of which shall be evaluated with respect to the geo-fence, may be part of may be moved by a movable entity, wherein the movable entity may be a vehicle, e.g. a car or a truck or a motorbike or any other suitable vehicle, or a bike or a person that carries the mobile device and may walk around. The asset may be configured to determine its geographic position. As an example, the asset may comprise means for determining the position of the asset, in particular based on multiple positioning technologies. For instance, the asset may receive signals from at least one Global Satellite navigation system satellite (GNSS) system, for example from GPS satellites, from BeiDou satellites, from GLONASS satellites or from Galileo satellites or other satellites. As an example, the asset may comprise a GNSS receiver in order to receive signals from the GNSS system such that the asset can estimate its location based on the GNSS signals. Additionally or alternatively, as an example, the asset may comprise a cellular and/or WiFi and/or Bluetooth receiver in order to receive signals from at least one cellular system, and/or from at least one WiFi system and/or from at least one Bluetooth system.

For instance, the means for determining the position may comprise means for estimating the position based on the received respective signals (e.g. GNSS signals, and/or on the received cellular signals, and/or on the received WiFi signals, and/or on the received Bluetooth signals), i.e., in this case the asset may be considered to have own positioning capabilities ("offline positioning"). Thus, the asset may be configured to make measurements of the radio environment, e.g. measurements of the cellular signals and/or of the WiFi signals and/or measurements of the Bluetooth signals which can be used by the mobile device to estimate the position of the asset. Additionally or alternatively, for instance, the asset may be configured to make measurements of the radio environment, e.g. measurements of the cellular signals and/or of the WiFi signals and/or measurements of the Bluetooth signals, and may be configured to transmit at least a part of the measurements to a cloud or server, e.g. via a wireless connection, such that the cloud or the server may estimate the asset's position based on the measurements received from the asset. Then, for instance, the cloud or the server may be configured to transmit the estimated position to the asset ("online positioning"). In any case, the asset may use the information indicating the at least one preferred positioning technology in order to decide which positioning technology to use for estimating the positioning.

Thus, the position (or location) of the asset can be estimated (or calculated). The position estimation (and the corresponding determining whether the geo-fence has been triggered) may in particularly be performed multiple times, in particular repeatedly (e.g. regularly or irregularly). In this regard, a location update interval associated may be with the asset and may define a frequency indicating how often the position of the asset is estimated in a predefined time period or indicating the time period between two subsequent estimations of the asset. For instance, the location update interval associated with the asset may represent a mean interval between two consecutive location update instants. As a non-limiting example, the location update interval may indicate how frequently the position of the asset is estimated, e.g. in terms of a time interval between two consecutive estimations of the asset. As an example, the location update interval of an asset could be one second, i.e. the time interval is one second which means that the position of the asset is estimated (or calculated) every second. It has to be understood that any other location update interval could be applied to the asset, e.g. every 10^{th} second or every minute, or every five minutes. A short location update interval associated with the asset may lead to increased power consumption of the asset compared to a longer location update interval, and therefore, it may be desired in power-constrained asset (as it is typically the case with IoT devices) to prefer or relatively long location update interval, e.g. in the range of several second or even minutes compared to an interval of one second or even less.

It is to be understood that the presentation of the invention in this section is merely by way of examples and non-limiting.

Other features of the invention will become apparent from the following detailed description considered in conjunction with the accompanying figures. It is to be understood, however, that the figures are designed solely for purposes of illustration and not as a definition of the limits of the invention, for which reference should be made to the appended claims. It should be further understood that the figures are not drawn to scale and that they are merely intended to conceptually illustrate the structures and procedures described herein.

### BRIEF DESCRIPTION OF THE FIGURES

- Fig. 1: is a schematic block diagram of a system comprising an operator device, a server and an asset for performing embodiments of the method according to the invention;
- Fig. 2: is a flow chart illustrating an exemplary embodiment of a method according to the invention;
- Fig. 3: is a flow chart illustrating another exemplary embodiment of a method according to the invention;
- Fig. 4a-c: show example representations of geo-fences according to the invention;
- Fig. 5a,b: show diagrams for illustrating the effect of the uncertainty of location estimates on the geo-fencing concept;
- Fig. 5c: shows a diagram for illustrating the achievable confidence depending on the geo-fence size and the uncertainty of the position estimate;
- Fig. 6: is a block diagram of an exemplary embodiment of an asset according to the invention;
- Fig. 7: is a block diagram of an exemplary embodiment of an apparatus according to the invention; and
- Fig. 8: is a schematic illustration of examples of tangible and non-transitory storage media according to the invention.

### DETAILED DESCRIPTION OF THE FIGURES

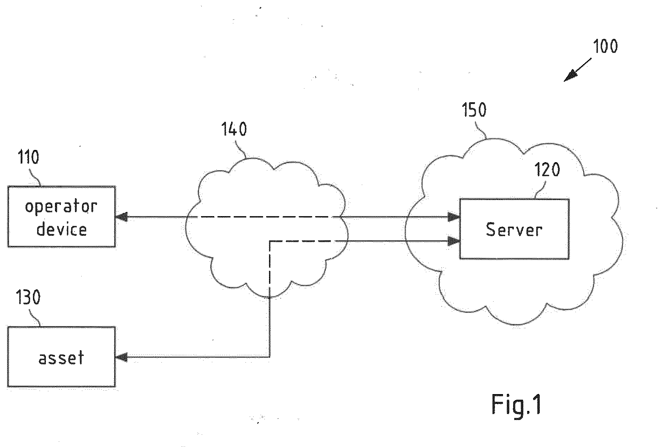

Fig. 1 is a schematic block diagram of an example embodiment of a system 100 comprising an operator device 110 and a server 120, which may each or together be an example of the at least first apparatus (performing a method according to the first exemplary aspect), an asset 130, which may be an example of the second apparatus (performing a method according to the second exemplary aspect and representative of a plurality of assets typically to be managed), and a network 140. However, generally, any of the apparatuses 110, 120 and 130 may alone or in combination represent the at least one apparatus for performing exemplary aspects of the invention. Server 120 may in particular be considered to comprise distributed servers and be located in an optional cloud 150. The different apparatuses 110, 120, 130 may communicate over network 140, which may represent a wireless network, wherein the wireless network may be any network of a cellular network (e.g. 2G, 3G, 4G, 5G or beyond 5G) or a non-cellular network, such as a WiFi network (e.g. based on IEEE 802.11), a Bluetooth network or any other well-suited wireless network.

Operator device 110 may be a client device and may be a mobile device for instance. The operator device 110 and/or the server 120 may be used by an operator for inputting geo-fence information at least partially defining a geo-fence and for inputting confidence information indicating a desired confidence for triggering the geo-fence. Also, the operator device 110 and/or server 120 may be used for selecting at least one preferred positioning technology to be used for evaluating the geo-fence, wherein the selection of the at least one preferred positioning technology takes into account the desired confidence and power consumption of the multiple positioning technologies.

For instance, server 120 may comprise a database or may be connected to a database, such as a database comprising location-specific and positioning technology-specific uncertainty information (e.g. for different cells and/or for different positioning technologies) and/or comprising location-specific and positioning technology-specific achievable confidence information (e.g. for different cells and/or for different positioning technologies). Furthermore, the database may also comprise information on the power consumption of different positioning technologies. Accordingly, operator device and/or server 120 may thus in particular be used for selecting at least one preferred positioning technology to be used for evaluating the geo-fence. The at least one preferred positioning technology may then be communicated to asset 130. Asset 130 may be any kind of movable or mobile device, the position of which is monitored with respect to the geo-fence by means of the at least one preferred positioning technology, i.e. asset 130 may trigger the desired geo-fence, once it is set up. The asset may be or may be part of an (e.g. battery powered) IoT device, a mobile computer, a mobile phone, a vehicle, a tracking device or any movable or mobile device, which may in particular be location-aware.

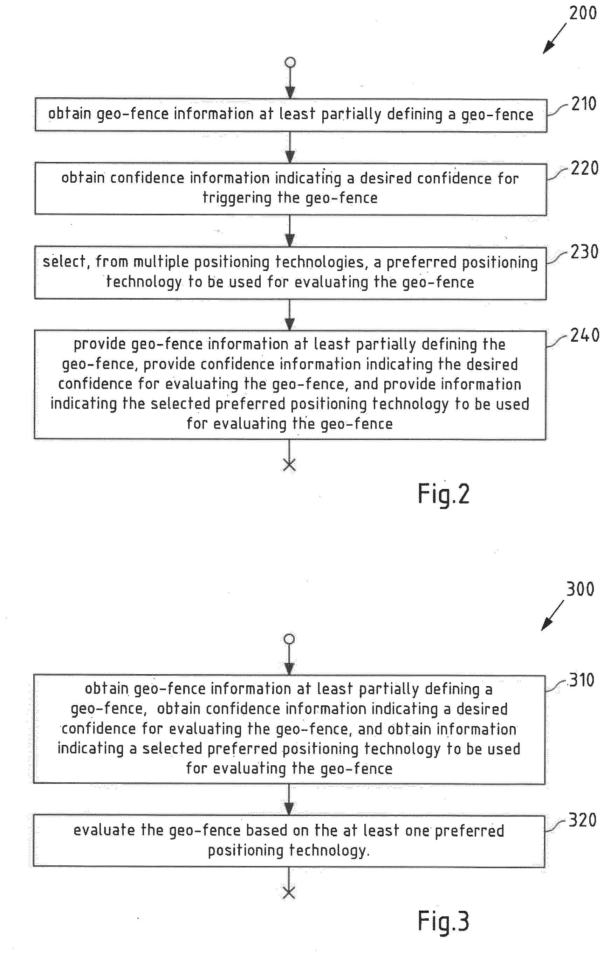

With regard to the flow charts 200, 300 of Figs. 2, 3 exemplary embodiments of methods according to the invention will be described.

In Fig. 2 an exemplary embodiment of a method according to a second aspect is shown.

In action 210, geo-fence information at least partially defining a geo-fence is obtained. The geo-fence information may be input at operator device 110 by a user and transmitted to server 120, for instance.

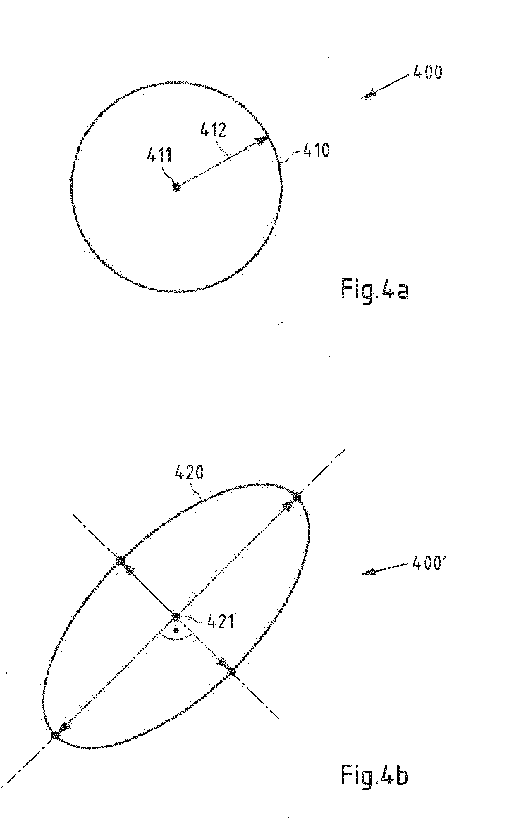

Example representations of such geo-fences are now described with reference to Fig. 4a - 4c.

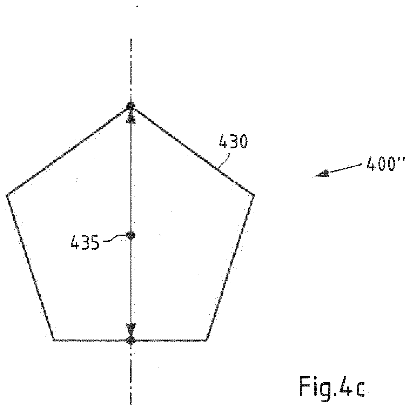

As exemplarily depicted in Fig. 4a, a geo-fence 400 may be defined by a point 411 and a radius 412 such that an area defined by the geo-fence is a circle 410 around the point 411 with radius 412, as exemplarily shown in Fig. 4a. As exemplarily depicted in Fig. 4b, a geo-fence 400' may be defined by an ellipse 420, which may be arranged around a point 421. As a further example and exemplarily depicted in Fig. 4c, a geo-fence 400" may also be defined by a polygon 430 set around an area-of-interest. For instance, said polygon 430 may be a standard polygon which enables the capture of a complex area in the real-word. In Fig. 4c, point 4.35 may define the center of the area defined by geo-fence 400". It may be useful to determine a representation of the size of the geo-fence for determining the achievable confidence of a geo-fence. As one example, such a size of a geo-fence may be indicative of the whole size of the geo-fence 400, 400', 400", e.g. the area of the geo-fence. For instance, the size of the geo-fence may be a representative of or correlated to the whole area of the geo-fence. For instance, if the geo-fence is defined by a circle, then the radius, or the diameter or the circumference may also be a representative of a size of the geo-fence, or as another example, if the geo-fence is defined by an ellipse or a polygon, the size being the whole size may be defined by the circumference of the ellipse 420 or the polygon 430 or another suitable representative being correlated with the area defined by the ellipse or the polygon.

Returning to Fig 2, in action 220 confidence information indicating a desired confidence for triggering the geo-fence is obtained. Similar to the geo-fence information, the confidence information may also be input at operator device 110 by a user and transmitted to server 120, for instance.

In action 230, at least one preferred positioning technology to be used for evaluating the geo-fence is selected from multiple positioning technologies. For this, the selection of the at least one preferred positioning technology takes into account the desired confidence and power consumption of the multiple positioning technologies. More specifically, the at least one preferred positioning technology has the lowest power consumption of those preferred positioning technologies, which enable evaluating the geo-fence with the desired confidence.

In one example, those positioning technologies enabling evaluating the geo-fence with the desired confidence are determining, from a plurality of positioning technologies. From those positioning technologies enabling evaluating the geo-fence with the desired confidence, the at least one positioning technology having the lowest power consumption is then determined as the at least one preferred positioning method.

In another example the at least one positioning technology having the lowest power consumption is determined from a plurality of positioning technologies. It is then checked whether the at least one positioning technology having the lowest power consumption enables evaluating the geo-fence with the desired confidence. This at least one positioning technology can be used as the at least one preferred positioning technology in case of a positive result of said checking. If the desired confidence cannot be reached by the so determined positioning technology (negative checking result) said determining and checking may be repeated with the remaining positioning technologies.

In order to determine, whether a positioning technology enables evaluating a geo-fence with a desired confidence, positioning uncertainty information may be obtained (e.g. from a database), which indicates one or more positioning uncertainties of the respective positioning technologies in the area defined by the geo-fence. Based on the geo-fence information and the so obtained positioning uncertainty information, a confidence achievable with a respective positioning technology for the geo-fence can be determined. The so obtained information on an achievable confidence can be used in order to determine whether a respective positioning technology enables evaluating the geo-fence with the desired confidence.

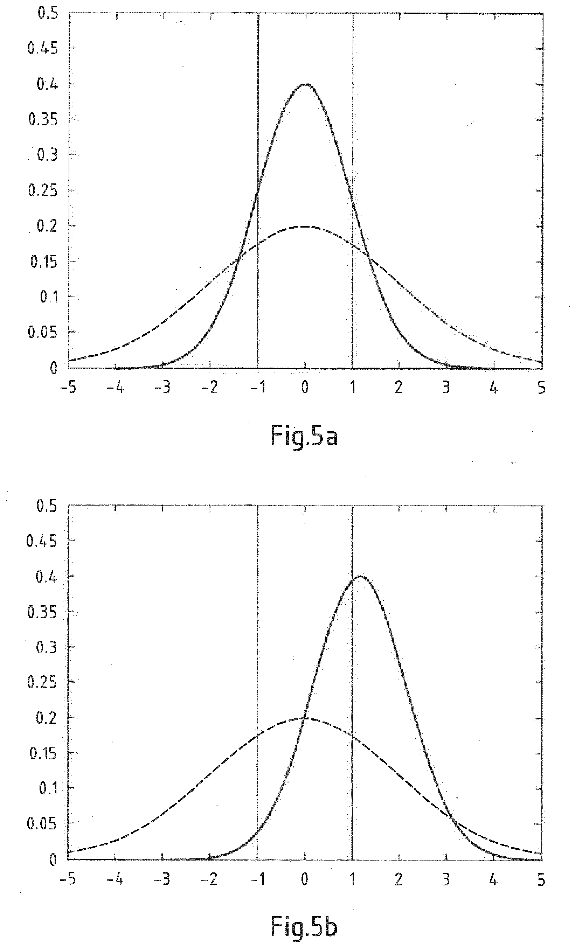

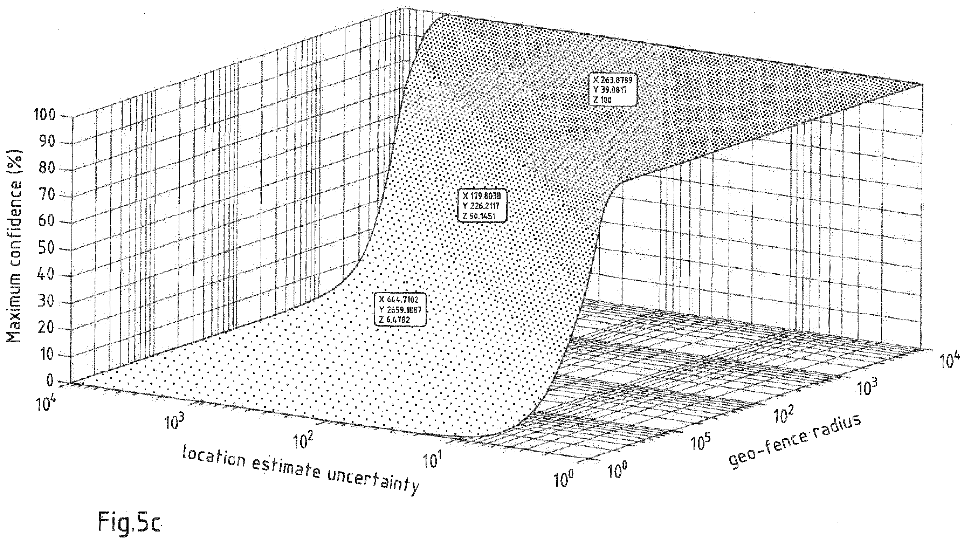

In the following it will be explained in more detail with reference to Fig. 5 how the determination of an achievable confidence for a certain geo-fence can be realized.

First, it shall be explained in more detail, how the location uncertainty and the geo-fence size or area relate to the achievable geo-fence triggering confidence. One way to look at this is to understand the achievable geo-fence triggering confidence as being related to the maximum probability mass enclosed by the geo-fence, i.e. the maximum of the location estimate probability density function integral over the geo-fence area.

In Fig. 5a, b the effect of the uncertainty on the geo-fencing concept is illustrated. In the two illustrated cases, the geo-fence is a one-dimensional area in the range [-1,1] for the sake of simplicity and illustration. In addition, in each of the cases there are two location estimates, (solid line and dashed line). In the examples, the location estimate is normally distributed and the best location estimate is taken as the mean of the distribution.

In the case illustrated in Fig. 5a, the means of both, the solid line and the dashed line location estimates are within the exemplary geo-fence (both have the mean of zero). However, the location estimates have different uncertainties (standard deviation of 1 and 2, respectively). Considering the probability of being inside the geo-fence, it turns out that the solid line location estimate is inside with 68% and the dashed line location estimate with 38% probability. Therefore, taking the uncertainty into account shows that the dashed line location estimate is most likely not inside the geo-fence. In contrast, the solid line location estimate is inside more probably than outside.

In the case illustrated in Fig. 5b, the mean of the solid line location estimate is outside the geo-fence, whereas dashed line one is inside. By a traditional approach the dashed line location estimate would trigger the geo-fence, while one indicated by the solid line does not. However, the location estimates have different uncertainties (standard deviation of 1 and 2, respectively). Therefore, considering the probability of being inside the geo-fence, it turns out that the solid line location estimate is inside with 41% and the dashed line location estimate with 38% probability. Therefore, taking the uncertainty into account shows that most likely none of the true locations is inside the geo-fence. Furthermore, although the mean of the solid line location estimate is outside and the mean of the dashed line location estimate is inside the geo-fence boundaries, it turns out that actually the solid line location estimate is inside the geo-fence at higher probability (by a small margin).

The above two examples show that just by considering, if the location is inside the geo-fence, may lead to incorrect conclusion about the situation.

Thus, in order to decide, whether to trigger a geo-fence or not, a desired confidence is set. This desired confidence can be understood as the fraction of the probability mass, which needs to be inside the geo-fence, before the geo-fence is triggered.

To exemplify, if the desire of the operator is to have a low number of false positives, the triggering confidence needs to be correspondingly high. For instance, setting the confidence level to 65% results in above first scenario (Fig. 5a) and the solid line location estimate triggers and the dashed line location estimate does not trigger the geo-fence. If the confidence level was set to e.g. 80%, none of the locations would trigger the geo-fence.

If the desire is to have high sensitivity (geo-fence triggers easily), the desired confidence needs to be set to a correspondingly low level. The drawback of this approach is the increasing number of false positives. For instance, in the above second case (Fig. 5b) setting the confidence level to 40% results in the solid line location estimate to trigger and the dashed line location estimate not to trigger the geo-fence.

Considering uncertainties and setting the confidence level also has consequences to the sizes of the geo-fences that can be triggered. To exemplify, assume that a positioning technology has typically a 10-m CEP68 uncertainty, i.e. the true location is inside a 10-m circle around the estimated location in 68% of the cases. If the desired confidence is set to 50%, this location technology would never be able to trigger smaller than an 8-m radius circular geo-fences (because a 10-m CEP68 means that less than 50% of the probability mass is enclosed by a radius circle smaller than 8m).

However, even if the geo-fence is large enough, there is still the complication that a certain position technology may not be able to reach its best or even its typical accuracy, because even the typical accuracy may often not be achieved in many situations, environments and locations.

Therefore, it is advantageous to not use a typical or standard value for the positioning uncertainty with a certain technology, but to estimate the achievable positioning performance in cells over large areas using the information from positioning databases (e.g. signal-of-opportunity databases, such as Wi-Fi or cellular network radiomap databases) and map data. This provides an understanding, what positioning performance (i.e. accuracy and uncertainty, respectively) is to be expected in each cell.

Now, these two concepts can be combined to model for each cell the maximum achievable triggering confidence for any given geo-fence size. Fig. 5c shows a result of such a calculation. In the diagram of Fig. 5c, the x-axis is the circular geo-fence radius (as an example representation of the size of the geo-fence for the example of a circular geo-fence). As discussed above, other representations of the size of the geo-fence may be used as well. The y-axis in the diagram of Fig. 5c, represents the location estimate uncertainty (in this example in terms of CEP68). The z-axis then represents the maximum triggering confidence achievable given the geo-fence radius and the location uncertainty CEP68.

Fig. 5c shows that when the uncertainty CEP68 is large and the geo-fence radius is small, the maximum achievable confidence is zero (lower left corner of the diagram). In contrast, when the uncertainty CEP68 is small and the geo-fence is large, the maximum achievable confidence can be 100% (upper right corner of the diagram). As illustrated, knowing the potential CEP68 for each small cell for respective parts of the surface earth for e.g. Wi-Fi -based network positioning enables modeling (per each small cell) the achievable confidence as a function of the geo-fence area size (in this example a circle).

Thus, Fig. 5c may be interpreted such that any desired confidence above the curve is a desired confidence above the maximum achievable confidence (and thus leading to an incompatibility between the desired confidence and the geo-fence) and any desired confidence (e.g. sufficiently) below the curve is a desired confidence below the maximum achievable confidence (and may thus be allowed during the creation of a geo-fence).

This computation can be performed for each positioning technology, so that one obtains information on an achievable confidence depending on the used positioning technology and the geo-fence to be evaluated. Thus, one can determine those positioning technologies, which enable evaluating the geo-fence with the desired confidence.

Returning to Fig. 2, in action 240, the geo-fence information at least partially defining the geo-fence, the confidence information indicating the desired confidence for evaluating the geo-fence; and the information indicating the least one selected preferred positioning technology to be used for evaluating the geo-fence are provided to a second apparatus, such as asset 130 of Fig. 1.

Flow chart 300 of Fig. 3 now shows an exemplary embodiment of a method according to the second aspect, performed by a second apparatus (such as asset 130) is illustrated.

In action 310, the second apparatus, such as asset 130 of Fig. 1, obtains (e.g. due to action 240, described above), the geo-fence information at least partially defining the geo-fence, the confidence information indicating the desired confidence for triggering the geo-fence, and the information indicating the at least one preferred positioning technology to be used for evaluating the geo-fence. In action 320, the second apparatus can now evaluate the geo-fence based on the at least one preferred positioning technology (e.g. by exclusively using the least one preferred positioning technology).

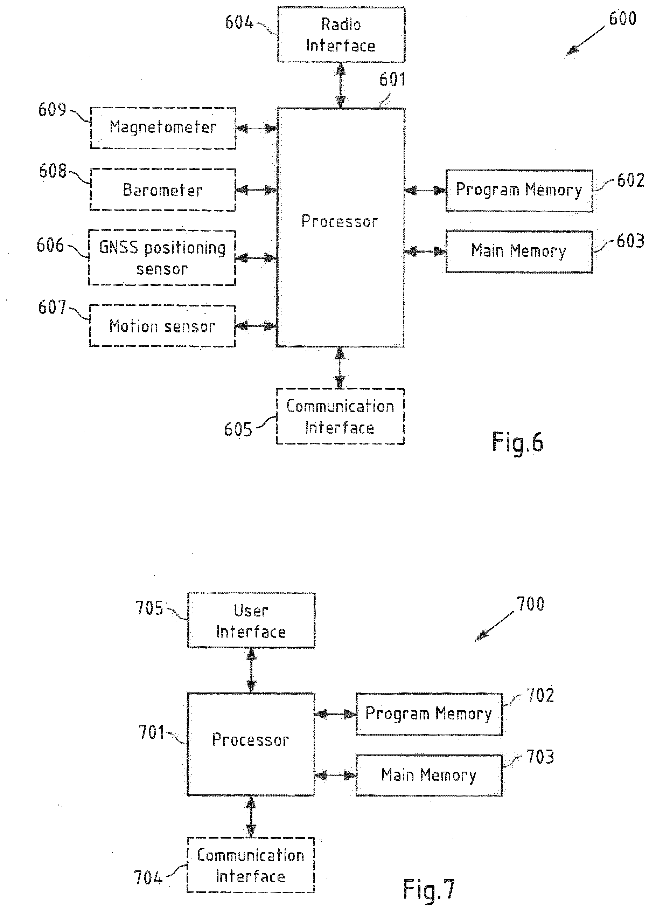

Fig. 6 is a block diagram of an exemplary embodiment of an apparatus in the form of a mobile device 600, which may in particular represent an asset, the position of which shall be monitored. For example, mobile device 600 may be one of a smartphone, a tablet computer, a notebook computer, a smart watch, a smart band and an IoT device. For instance, mobile device 600 may be considered to be part or at least carried by a vehicle, e.g. a car or a truck or any other well-suited vehicle.

Mobile device 600 comprises a processor 601. Processor 601 may represent a single processor or two or more processors, which are for instance at least partially coupled, for instance via a bus. Processor 601 executes a program code stored in program memory 602 (for instance program code causing mobile device 600 to perform one or more of the embodiments of a method according to the invention or parts thereof, when executed on processor 601), and interfaces with a main memory 603. Program memory 602 may also contain an operating system for processor 601. Some or all of memories 602 and 603 may also be included into processor 601.

One of or both of a main memory and a program memory of a processor (e.g. program memory 602 and main memory 603) could be fixedly connected to the processor (e.g. processor 601) or at least partially removable from the processor, for instance in the form of a memory card or stick.

A program memory (e.g. program memory 602) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 603) may for instance be a volatile memory. It may for instance be a DRAM memory, to give non-limiting example. It may for instance be used as a working memory for processor 601 when executing an operating system and/or programs.

Processor 601 further controls a radio interface 604 configured to receive and/or output data and/or information. For instance, radio interface 604 may be configured to receive radio signals from a radio node. The radio interface 604 is configured to scan for radio signals that are broadcast by radio nodes, e.g. based on WiFi (WLAN) or a Bluetooth or any other radio communications system. Furthermore, the radio interface 604 may be configured for evaluating (e.g. taking measurements on the received radio signals like measuring a received signal strength) and/or extracting data or information from the received radio signals. It is to be understood that any computer program code based processing required for receiving and/or evaluating radio signals may be stored in an own memory of radio interface 604 and executed by an own processor of radio interface 604 or it may be stored for example in memory 603 and executed for example by processor 601.

For example, the radio interface 604 may at least comprise a BLE and/or Bluetooth radio interface including at least a BLE receiver (RX). The BLE receiver may be a part of a BLE transceiver. It is to be understood that the invention is not limited to BLE or Bluetooth. For example, radio interface 604 may additionally or alternatively comprise a WLAN radio interface including at least a WLAN receiver (RX). The WLAN receiver may also be a part of a WLAN transceiver.

Moreover, for instance, processor 601 may control a further communication interface 605 which is for example configured to communicate according to a cellular communication system like a 2G/3G/4G/5G cellular communication system. Mobile device 600 may use communication interface 605 to communicate with a server, e.g. with server 120 depicted in Fig. 1.

Furthermore, processor 601 may control an optional GNSS positioning sensor 606 (e.g. a GPS sensor or any other GNSS positioning techniques previously mentioned). GNSS positioning sensor may be configured to receive satellite signals of a GNSS system (e.g. GPS satellite signals) and to determine a position of the mobile device (e.g. a current position of the mobile device) at least partially based on satellite signals of the GNSS system that are receivable at this position.

Furthermore, processor 601 may control further optional means for determining a position of the mobile device either alone or in combination with other means. For instance, mobile device may comprise one or more of a motion sensor 607, such as an accelerometer or a gyroscope (which may in particular be able to determine a relative position with respect to an absolute position fix from another positioning technology), a barometer 608 (which may allow for determining the vertical position of the mobile device) and a magnetometer 609 (which may allow for determining a position fix based on a magnetic footprint, for instance).

Any of the radio interface 604 (i.e. specifically the Bluetooth interface, the WLAN interface), the communication interface 605 (i.e. specifically a 2G/3G/4G/5G communication interface), the GNSS position sensor 606, the motion sensor 607, the barometer 608, the magnetometer 609 may alone or in combination allow for determining a positioning and provide a positioning technology, which may be selected as a preferred positioning technology. For instance, in terms of power consumption the GNSS sensor may have a high power consumption (but typically a high accuracy and thus a high achievable confidence, at least outdoors), while cellular communication interface may have a low power consumption in comparison (but potentially a lower accuracy and achievable confidence, as well). Both, the achievable confidence as well as the power consumption may in particular be a function of the location of the mobile device and may not be universally valid but may rather be derived from a database in dependence of the location of the mobile device, as explained above.

The components 602 to 606 of mobile device 600 may for instance be connected with processor 601 by means of one or more serial and/or parallel busses.

It is to be understood that mobile device 600 may comprise various other components. For example, mobile device 600 may optionally comprise a user interface (e.g. a touch-sensitive display, a keyboard, a touchpad, a display, etc.) or one or more inertial sensors (e.g. an accelerometer, a gyroscope, a magnetometer, a barometer, etc.).

For instance, the mobile device 600 may process a set geo-fence and may track its position based on the at least one preferred positioning technology in order to provide a notification when the mobile device is within the boundaries of the geo-fence, i.e. that the geo-fence is triggered.

Fig. 7 is a block diagram of an exemplary embodiment of a an apparatus, such as operator device 110 or server 120 of Fig. 1, which may be an operator device or a server in a positioning support system or any other server, e.g. of an Internet of Things (IoT) cloud.

For instance, apparatus 700 may be used for setting up and/or processing at least one geo-fence (as described with the method of Fig. 2) and/or may track the position of one or more assets (e.g. asset 130 of Fig. 1) in order to send a notification when the asset triggers a geo-fence.

Apparatus 700 comprises a processor 701. Processor 701 may represent a single processor or two or more processors, which are for instance at least partially coupled, for instance via a bus. Processor 701 executes a program code stored in program memory 702 (for instance program code causing apparatus 700 to perform one or more of the embodiments of a method according to the invention or parts thereof (e.g. the method or parts of the method described below with reference to Fig. 2, when executed on processor 701), and interfaces with a main memory 703.

Program memory 702 may also comprise an operating system for processor 701. Some or all of memories 702 and 703 may also be included into processor 701.

Moreover, processor 701 controls a communication interface 704 which is for example configured to communicate according to a cellular communication system like a 2G/3G/4G/5G cellular communication system. Communication interface 704 of apparatus 700 may be provided for communicate between operator device 110 and server 150 in Fig. 1.

Apparatus 700 further comprises a user interface 705 (e.g. a touch-sensitive display, a keyboard, a touchpad, a display, etc.). The user interface 705 may be configured to receive a user input for defining a geo-fence and/or a desired confidence, as explained above, in particular with reference to Fig. 2.

The components 702 to 705 of apparatus 700 may for instance be connected with processor 701 by means of one or more serial and/or parallel busses.

It is to be understood that apparatus 700 may comprise various other components.

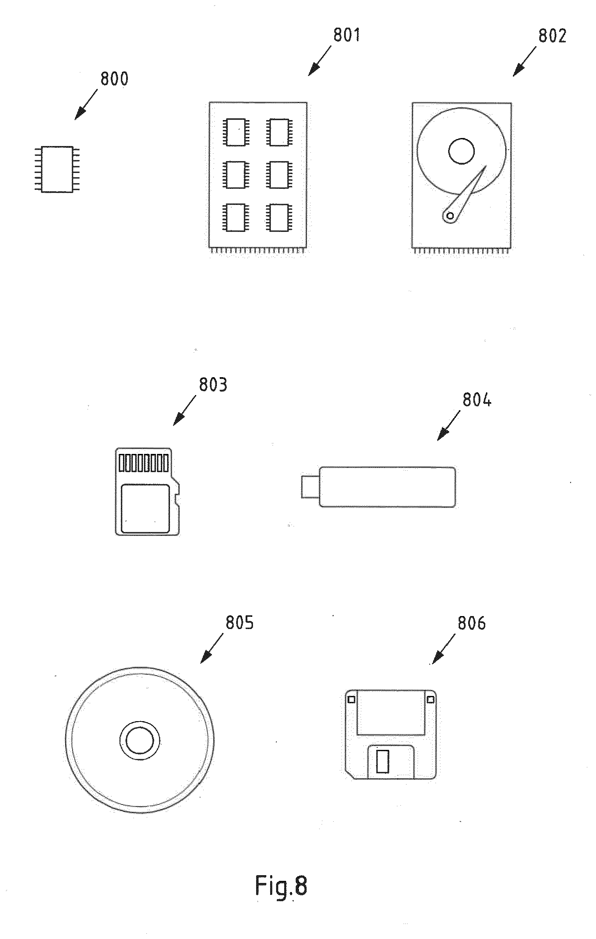

Fig. 8 is a schematic illustration of examples of tangible and non-transitory computer-readable storage media according to the present invention that may for instance be used to implement memory 602 of Fig. 6 or memory 702 of Fig. 7. To this end, Fig. 8 displays a flash memory 800, which may for instance be soldered or bonded to a printed circuit board, a solid-state drive 801 comprising a plurality of memory chips (e.g. Flash memory chips), a magnetic hard drive 802, a Secure Digital (SD) card 803, a Universal Serial Bus (USB) memory stick 804, an optical storage medium 805 (such as for instance a CD-ROM or DVD) and a magnetic storage medium 806.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 601 and 701 of Figs. 6 and 7, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' .should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

The following embodiments are also disclosed:
1. A method, performed by at least a first apparatus, the method comprising:
   - obtaining geo-fence information at least partially defining a geo-fence;
   - obtaining confidence information indicating a desired confidence for triggering the geo-fence; and
   - selecting, from multiple positioning technologies, at least one preferred positioning technology to be used for evaluating the geo-fence, wherein the selection of the at least one preferred positioning technology takes into account the desired confidence and power consumption of the multiple positioning technologies.
2. The method according to embodiment 1, wherein the at least one preferred positioning technology enables evaluating the geo-fence with the desired confidence.
3. The method according to embodiment 1 or 2, wherein, for selecting the at least one preferred positioning technology, positioning technologies with lower power consumptions are preferred.
4. The method according to any of the preceding embodiments, wherein the at least one preferred positioning technology has the lowest power consumption of those positioning technologies enabling evaluating the geo-fence with the desired confidence.
5. The method according to any of the preceding embodiments, wherein the selecting of the at least one preferred positioning technology comprises:
   - determining, from a plurality of positioning technologies, those positioning technologies enabling evaluating the geo-fence with the desired confidence; and
   - determining, from those positioning technologies enabling evaluating the geo-fence with the desired confidence, the at least one positioning technology having the lowest power consumption as the at least one preferred positioning method.
6. The method according to any of the preceding embodiments, wherein the selecting of the at least one preferred positioning technology comprises:
   - determining, from a plurality of positioning technologies, the at least one positioning technology having the lowest power consumption;
   - checking whether the at least one positioning technology having the lowest power consumption enables evaluating the geo-fence with the desired confidence;
   - using this at least one positioning technology as the at least one preferred positioning technology in case of a positive result of said checking; and
   - repeating said determining and checking with the remaining positioning technologies in case of a negative result of said checking.
7. The method according to any of the preceding embodiments, wherein the method further comprises:
   - obtaining information on an achievable confidence for the geo-fence defined by the geo-fence information with respect to at least some of the multiple positioning technologies;
   - using the information on an achievable confidence in order to determine whether a respective positioning technology enables evaluating the geo-fence with the desired confidence.
8. The method according to embodiment 7, wherein the method further comprises:
   - obtaining positioning uncertainty information indicating one or more positioning uncertainties of one or more positioning technologies in the area defined by the geo-fence;
   - determining, based on the geo-fence information and the positioning uncertainty information, an achievable confidence achievable with a respective positioning technology for the geo-fence defined by the geo-fence information.
9. The method according to any of the preceding embodiments, wherein multiple preferred positioning technologies to be used for evaluating the geo-fence are selected.
10. The method according to any of the preceding embodiments, wherein the geo-fence comprises multiple sub-areas, wherein, for one or more of the multiple sub-areas, at least one preferred positioning technology to be used for evaluating the geo-fence in the respective sub-area is selected.
11. The method according to any of the preceding embodiments, wherein one or more of the multiple positioning technologies are based on one or more of:
   - a cellular communication system;
   - a non-cellular communication system;
   - a communication system providing signals of opportunity;
   - a communication system providing a dedicated positioning solution;
   - a global satellite navigation system;
   - a wireless local area network;
   - a communication system utilizing Wi-Fi technology;
   - a communication system utilizing GSM technology;
   - a communication system utilizing WCDMA technology;
   - a communication system utilizing LTE technology;
   - a communication system utilizing Bluetooth technology; and/or
   - a communication system utilizing UWB technology.
12. The method according to any of the preceding embodiments, the method further comprising:
   - providing, to a second apparatus,
      - the geo-fence information at least partially defining the geo-fence;
      - the confidence information indicating the desired confidence for evaluating the geo-fence; and
      - information indicating the least one selected preferred positioning technology to be used for evaluating the geo-fence.
13. The method according to embodiment 12, wherein the geo-fence information, the confidence information and the information indicating the least one preferred positioning technology are provided to the second apparatus as part of a geo-fence definition.
14. A method, performed by at least a second apparatus, the method comprising:
   obtaining, from at least a first apparatus,
      - geo-fence information at least partially defining a geo-fence;
      - confidence information indicating a desired confidence for triggering the geo-fence; and
      - information indicating at least one preferred positioning technology to be used for evaluating the geo-fence.
15. The method according to embodiment 14, the method further comprising:
   - evaluating the geo-fence based on the at least one preferred positioning technology.
16. An apparatus comprising means for performing the method according to any of embodiments 1 to 15.
17. A computer program code, the computer program code when executed by a processor of an apparatus causing said apparatus to perform the method according to any of embodiments 1 to 15.
18. A system at least comprising a first apparatus and a second apparatus, wherein said first apparatus and said second apparatus are configured to cooperate for performing the method according to any of embodiments 1 to 15 or one of said first apparatus and said second apparatus is configured for performing the method according to any of embodiments 1 to 15 alone.

## Claims

1. A method, performed by at least a first apparatus (110, 120,130, 600, 700), the method comprising:
- obtaining (210) geo-fence information at least partially defining a geo-fence;
- obtaining (220) confidence information indicating a desired confidence for triggering the geo-fence; and
- selecting (230), from multiple positioning technologies, at least one preferred positioning technology to be used for evaluating the geo-fence, wherein the selection of the at least one preferred positioning technology takes into account the desired confidence and power consumption of the multiple positioning technologies.

2. The method according to claim 1, wherein the at least one preferred positioning technology enables evaluating the geo-fence with the desired confidence.

3. The method according to claim 1 or 2, wherein, for selecting the at least one preferred positioning technology, positioning technologies with lower power consumptions are preferred.

4. The method according to any of the preceding claims, wherein the at least one preferred positioning technology has the lowest power consumption of those positioning technologies enabling evaluating the geo-fence with the desired confidence.

5. The method according to any of the preceding claims, wherein the selecting of the at least one preferred positioning technology comprises:
- determining, from a plurality of positioning technologies, those positioning technologies enabling evaluating the geo-fence with the desired confidence; and
- determining, from those positioning technologies enabling evaluating the geo-fence with the desired confidence, the at least one positioning technology having the lowest power consumption as the at least one preferred positioning method.

6. The method according to any of the preceding claims, wherein the selecting of the at least one preferred positioning technology comprises:
- determining, from a plurality of positioning technologies, the at least one positioning technology having the lowest power consumption;
- checking whether the at least one positioning technology having the lowest power consumption enables evaluating the geo-fence with the desired confidence;
- using this at least one positioning technology as the at least one preferred positioning technology in case of a positive result of said checking; and
- repeating said determining and checking with the remaining positioning technologies in case of a negative result of said checking.

7. The method according to any of the preceding claims, wherein the method further comprises:
- obtaining information on an achievable confidence for the geo-fence defined by the geo-fence information with respect to at least some of the multiple positioning technologies;
- using the information on an achievable confidence in order to determine whether a respective positioning technology enables evaluating the geo-fence with the desired confidence.

8. The method according to claim 7, wherein the method further comprises:
- obtaining positioning uncertainty information indicating one or more positioning uncertainties of one or more positioning technologies in the area defined by the geo-fence;
- determining, based on the geo-fence information and the positioning uncertainty information, an achievable confidence achievable with a respective positioning technology for the geo-fence defined by the geo-fence'information.

9. The method according to any of the preceding claims, wherein multiple preferred positioning technologies to be used for evaluating the geo-fence are selected.

10. The method according to any of the preceding claims, wherein the geo-fence comprises multiple sub-areas, wherein, for one or more of the multiple sub-areas, at least one preferred positioning technology to be used for evaluating the geo-fence in the respective sub-area is selected.

11. The method according to any of the preceding claims, wherein one or more of the multiple positioning technologies are based on one or more of:
- a cellular communication system;
- a non-cellular communication system;
- a communication system providing signals of opportunity;
- a communication system providing a dedicated positioning solution;
- a global satellite navigation system;
- a wireless local area network;
- a communication system utilizing Wi-Fi technology;
- a communication system utilizing GSM technology;
- a communication system utilizing WCDMA technology;
- a communication system utilizing LTE technology;
- a communication system utilizing Bluetooth technology; and/or
- a communication system utilizing UWB technology.

12. The method according to any of the preceding claims, the method further comprising:
- providing, to a second apparatus,
- the geo-fence information at least partially defining the geo-fence;
- the confidence information indicating the desired confidence for evaluating the geo-fence; and
- information indicating the least one selected preferred positioning technology to be used for evaluating the geo-fence.

13. The method according to claim 12, wherein the geo-fence information, the confidence information and the information indicating the least one preferred positioning technology are provided to the second apparatus as part of a geo-fence definition.

14. A method, performed by at least a second apparatus (110, 120, 130, 600, 700), the method comprising:
- obtaining (310), from at least a first apparatus,
- geo-fence information at least partially defining a geo-fence;
- confidence information indicating a desired confidence for triggering the geo-fence; and
- information indicating at least one preferred positioning technology to be used for evaluating the geo-fence.

15. The method according to claim 14, the method further comprising:
- evaluating (320) the geo-fence based on the at least one preferred positioning technology.

16. An apparatus comprising means for performing the method according to any of claims 1 to 15.

17. A computer program code, the computer program code when executed by a processor of an apparatus causing said apparatus to perform the method according to any of claims 1 to 15.

18. A system at least comprising a first apparatus and a second apparatus, wherein said first apparatus and said second apparatus are configured to cooperate for performing the method according to any of claims 1 to 15 or one of said first apparatus and said second apparatus is configured for performing the method according to any of claims 1 to 15 alone.
